# EUROPÄISCHE PATENTSCHRIFT

(11) **EP 2 392 159 B1**
(45) Veröffentlichungstag und Bekanntmachung des Hinweises auf die Patenterteilung: **26.07.2017**
(21) Anmeldenummer: 09839066.9
(22) Anmeldetag: 04.03.2009
(51) Int. Cl.: H04W 8/04, H04W 36/38

(54) **VERFAHREN ZUR ERKENNUNG UNNÖTIGER ZELLWECHSEL IN EINEM MOBILFUNKNETZ**
METHOD FOR RECOGNIZING UNNECESSARY CELL CHANGES IN A MOBILE RADIO NETWORK
PROCÉDÉ POUR DÉTECTER DES TRANSFERTS DE CELLULE INUTILES DANS UN RÉSEAU DE COMMUNICATION MOBILE

(30) Priorität: 29.01.2009 WO PCT/EP2009/000565
(43) Veröffentlichungstag der Anmeldung: 07.12.2011
(73) Patentinhaber: Deutsche Telekom AG, 53113 Bonn (DE)
(72) Erfinder: KLEO, Rémi, 53332 Bornheim (DE)
(74) Vertreter: Cohausz Hannig Borkowski Wißgott
(86) Internationale Anmeldenummer: PCT/EP2009/001536
(87) Internationale Veröffentlichungsnummer: WO 2010/085985

(56) Entgegenhaltungen:
- EP-A- 0 969 685
- WO-A-01/52589
- WO-A-98/52375
- WO-A1-2006/012909

## Beschreibung

Die Erfindung betrifft ein Verfahren zum Betrieb eines zellularen Mobilfunknetzes, wobei jede Zelle des Mobilfunknetzes eine eindeutige Kennung aufweist, und wobei zu einem in einer Zelle aktuell registrierten Mobilfunkendgerät die Kennung der aktuellen Zelle netzseitig temporär gespeichert wird.

Ein Verfahren dieser Art ist aus der WO 2006/012909 A1 bekannt, wobei hier ferner auch offenbart ist, dass zusätzlich der Zeitpunkt der Registrierung in der aktuellen Zelle gespeichert wird.

Mobilfunknetze ermöglichen es den Nutzern die angebotenen Dienste insbesondere über verschiedene Funktechniken zu benutzen, wie beispielsweise 2G (GSM/GPRS/EDGE), 3G (UMTS/HSxPA) oder LTE. So beschreibt beispielsweise die europäischen Patentanmeldung EP 0 969 685 A2 eine von einem MSC (Mobile Switching Center) verwaltete Service Area, innerhalb der sich ein mobiles Endgerät zur Nutzung von Diensten eines Mobilfunknetzes bewegt. Um Ressourcen des Mobilfunknetzes bei einem ankommenden Anruf zu reduzieren, pagen nicht alle Basisstationen der Service Area, sondern nur diejenige, über die das Endgerät aktuell eingebucht ist. Hierzu informiert das Endgerät das MSC periodisch alle paar Minuten über seinen Standort. Das MSC verwaltet dabei entsprechende Daten in einem Speicherbereich für besuchende Endgeräte, der u.a. einen Header umfasst, in welchem die Zellnummer der aktuellen Zelle sowie der Zeitpunkt der letzten Lokalisierungsregistrierung hinterlegt ist. Mittels dieses Zeitpunktes wird festgestellt, ob das Endgerät zwischenzeitlich ausgeschaltet oder in einem nicht versorgten Bereich befindlich ist. In diesem Fall wird das Endgerät netzseitig auf einen inaktiven Status gestellt, so dass keine unnötigen Pagingversuche durchgeführt werden.

Die Mobilfunknetze werden dabei üblicherweise in Funknetz und "Core Network", d.h. das Kernnetz, unterteilt.

Das Funknetz sorgt für die Funkversorgung, das "Core Network" handelt andere Funktionen des Netzes, wie zum Beispiel die Lokalisierung der Endgeräte, damit die Kunden jederzeit erreichbar werden durch Initiierung des so genannten Pagings (Rundruf innerhalb eines Netzgebietes umfassend mehrere Zellen) für so genannte "Mobile Terminated Calls", d.h. Anrufe innerhalb eines Mobilfunknetzes, bei dem das angerufene Endgerät ein Mobilfunkendgerät ist.

Die Mobilfunkbetreiber haben die Möglichkeit, eine Priorisierung der Funktechniken (2G (GSM/GPRS/EDGE), 3G (UMTS/HSxPA) oder LTE) zu definieren.
Es gibt dabei Standorte im Netz die als Grenze zwischen einer Funktechnik und der anderen gelten.

Die Standards haben verschiedene Möglichkeiten definiert, damit abhängig von der Qualität der Funkversorgung oder der Priorisierung der Funktechniken entweder die Endgeräte automatisch von einer Zelle in eine andere wechseln und dabei eine Anforderung zum Core Net (Kernnetz) schicken (z.B. Gebietsänderungsprozedur, so genannte Routing Area Update Prozedur, abgekürzt RAU) oder damit das Netz abhängig von der Qualität der Funkversorgung oder der Priorisierung der Funktechniken die Endgeräte zum Wechsel von einer Zelle in eine andere zwingt (Übergabeprozedur, so genannte Handover Prozedur).

Die zwei oben beschriebenen Prozeduren führen zu einer Änderung des Standorts des Endgerätes, der im Kernnetz, d.h. im Core Net registriert ist.

Die Knoten des Kernnetzes sind durch die übliche Signalisierung, die während eines Zellwechsels ausgetauscht wird, in der Lage, zwischen einem Wechseln innerhalb des Knoten und einem Wechsel zu einem anderen Knoten zu unterscheiden.

Wenn ein Endgerät sich an der Grenze zwischen 2 oder mehr Zellen oder Funktechniken befindet, kann es sich in einem unstabilen Zustand halten und oft zwischen die verschiedene Zellen oder Funktechniken wechseln: Diese Problematik kann auch als Ping-Pong-Effekt oder Karusselleffekt beschrieben werden. Hieraus resultieren als unnötig oder überflüssig zu bezeichnende Zellwechsel.

Es gibt Endgeräte, die zwischen zwei oder mehr Zellen bzw. zwei oder mehr Funktechniken oft und schnell hin und her wechseln.

Besonders nachteilig ist dabei, dass dies eine unnötige Signalisierungslast im Netz verursacht und drastisch die Batterie-Lebensdauer der Endgeräte reduziert.

Die der Erfindung zugrunde liegende Aufgabe ist es, diese Nachteile zu überwinden und ein Verfahren bereitzustellen, welches geeignet ist, instabile Zellwechselsituationen zu detektieren und somit unnötige, überflüssige Zellwechsel zu erkennen, um unnötige Zellwechsel ggf. unterbinden zu können.

Diese Aufgabe wird erfindungsgemäß gelöst durch ein Verfahren gemäß Anspruch 1. Weitere vorteilhafte Ausgestaltungen der Erfindung sind in den Unteransprüchen angegeben.

Besonders vorteilhaft bei dem Verfahren zum Betrieb eines zellularen Mobilfunknetzes, wobei jede Zelle des Mobilfunknetzes eine eindeutige Kennung aufweist, und wobei zu einem in einer Zelle aktuell registrierten Mobilfunkendgerät die Kennung der aktuellen Zelle netzseitig temporär gespeichert wird, ist es, dass zusätzlich zumindest der Zeitpunkt der Registrierung in der aktuellen Zelle gespeichert wird, insbesondere temporär gespeichert wird.

Vorzugsweise wird zusätzlich die Kennung der vor der Registrierung des Mobilfunkendgerätes in der aktuellen Zelle n genutzten Zelle n-1 und der Zeitpunkt t-1 der Registrierung in der zuvor genutzten Zelle n-1 gespeichert, insbesondere temporär gespeichert.

Besonders bevorzugt wird bei einer Auslösung einer Wechselprozedur zwischen zwei Zellen, die von dem gleichen Kernnetzknoten behandelt werden (Intra Wechsel) zur Registrierung des Mobilfunkendgerätes in einer neuen Zelle n+1 des Mobilfunknetzes die Kennung der neuen Zelle n+1 mit der Kennung der vor der Registrierung in der aktuellen Zelle n genutzten Zelle n-1 verglichen, und bei einer Übereinstimmung der Kennungen der Zellen n+1 und n-1 erfolgt eine Auswertung der Zeitpunkte (t-1) und (t+1) der Registrierung in der vorherigen Zelle n-1 und des aktuellen Zeitpunkts, wobei bei Unterschreitung einer festlegbaren Zeitspanne Δt=(t-1)-(t+1) der Wechsel in die neue Zelle n+1 netzseitig als überflüssig, d.h. als unnötig detektiert wird, insbesondere abgelehnt wird.

Das heißt, dass die Ablehnung optional erfolgt, zunächst wird ein solcher Wechsel netzseitig als überflüssiger Wechsel detektiert und gezählt.

Besonders bevorzugt wird bei einer Auslösung einer Wechselprozedur zwischen zwei Zellen, die von zwei verschiedenen Kernnetzknoten behandelt werden (Inter Wechsel) zur Registrierung des Mobilfunkendgerätes in einer neuen Zelle n+1 des Mobilfunknetzes die Kennung der neuen Zelle n+1 mit der Kennung der vorher genutzte Zelle n verglichen, und bei einer Übereinstimmung der Kennungen der Zellen n+1 und n erfolgt eine Auswertung der Zeitpunkte (t-1) und (t) der Registrierung in der vorherigen Zelle n-1 und des aktuellen Zeitpunkts, wobei bei Unterschreitung einer festlegbaren Zeitspanne Δt=(t+1)-(t) der Wechsel in die neue Zelle n+1 netzseitig als unnötig, d.h. als überflüssig detektiert wird, insbesondere abgelehnt wird.

Das heißt, dass auch im Fall eines Inter Wechsels von einem ersten Kernnetzknoten zu einem anderen Kernnetzknoten die Ablehnung wiederum optional erfolgt, zunächst wird ein solcher Wechsel netzseitig als überflüssiger Wechsel detektiert und gezählt. Als überflüssig, also unnötig, kann ein Wechsel bei einem instabilen Zustand bezeichnet werden.

Vorzugsweise wird bei einer Auslösung einer Wechselprozedur zur Registrierung des Mobilfunkendgerätes in einer neuen Zelle (n+1) des Mobilfunknetzes zwischen zwei verschiedenen Kernnetz-Knoten der gleichen Art die Kennung der Zelle, die als aktuelle Zelle (n) im Ausgangs-Kernnetz-Knoten (d.h. im alten Knoten) gespeichert war, in dem Speicherregister für die frühere Zelle (n-1) gespeichert, und die Werte in dem Speicherregister für die aktuelle Zelle (n) werden reinitialisiert, nachdem der Ausgangs-Kernnetz-Knoten (d.h. der alte Knoten) die Meldung (beispielsweise so genannte Cancel Location bei Verlassen des lokalen Gebietes) von einer zentralen Datenbank, insbesondere HLR oder HSS, erhalten hat, dass der Wechsel erfolgreich war.

Vorzugsweise werden bei einer Auslösung einer Wechselprozedur zur Registrierung des Mobilfunkendgerätes in einer neuen Zelle (n+1) des Mobilfunknetzes zwischen zwei verschiedenen Kernnetz-Knoten der gleichen Art oder innerhalb des gleichen Kernnetz-Knoten, die Kennung der neuen Zelle (n+1) mit der Kennung der früher benutzten Zelle (n-1), die vom Endgerät in der Aufforderung zum Zellwechsel (engl.: Routing Area Update Request oder Location Area Update Request) mitgeschickt wurde, verglichen und bei einer Übereinstimmung der Kennungen (n+1, n-1) erfolgt eine Auswertung der Zeitpunkte (t+1, t-1) der Registrierung in der vorherigen Zelle (n-1) und der zukünftigen Zelle (n+1), wobei bei Unterschreitung einer festlegbaren Zeitspanne der Wechsel in die neue Zelle (n+1) netzseitig als überflüssiger Wechsel detektiert wird.

Das Mobilfunknetz wird in Zellen n unterteilt. Diese Zellen sind jeweils in eine größere "Gruppe" zusammen gefasst, so genannte Gebiete, die üblicherweise mit verschiedenen Termini wie insbesondere Location Areas, Routing Areas, Service Area oder Tracking Areas bezeichnet werden. Diese Begriffe bezeichnen jeweils ein Gebiet, welches mehrere Zellen des zellularen Mobilfunknetzes umfasst.

Jede Zelle wird mit einer einzigartige Kennung identifiziert, die globale Kennung. Die globale Kennung (englisch: global cell id). Diese "Global Cell ID" beinhaltet die Kennung der Zelle und der Gruppe, wo diese Zelle hingehört.

Wenn ein Endgerät in einer Zelle eingebucht ist, speichert das Kernnetz, d.h. das sog. "Core Network" die globale Kennung der Zelle, wo das Mobilfunkendgerät eingebucht ist.

Wenn das Endgerät während einer gegebenen Zeit still bleibt und keine Aktivität zeigt, wird die aktuelle globale Zellkennung bisher üblicherweise gelöscht.

Falls eine Anfrage zum Netz geschickt wird um das Endgerät zu erreichen oder um dem Endgerät Daten zuzuschicken, muss dann das Kernnetz ("Core Network") einen Rundruf, eine so genannte Paging Prozedur initiieren.

Wenn ein Endgerät aufgrund der Qualität der Funkversorgung und/oder der Priorität der verschiedene Funktechniken sich meldet, um von einer Zelle oder Zellgruppe (zum Beispiel Location Area 1) in eine andere Zelle oder Zellgruppe (zum Beispiel Location Area 2) zu wechseln, schicken das Funknetz und das Endgerät die gesamte Kennung der Zelle, wo das Endgerät hin will zum "Core Network", d.h. zum Kernnetz.

Wenn andererseits das Funknetz sich aufgrund der Qualität der Funkversorgung und/oder der Priorität der verschiedene Funktechniken entscheidet, ein Endgerät zum Wechseln zu zwingen, schicken das Funknetz und das Endgerät die gesamte Kennung der Zelle, wo das Endgerät hin soll zum "Core Network".

Das "Core Network" kennt damit die globale Zellkennung, wo das Endgerät hin will oder muss.

Wenn ein Endgerät die Zelle gewechselt hat, löscht der "Core Network-Knoten" (Kernnetzknoten) bisher die alte globale Zellekennung aus seinem Speicher und speichert die neue Kennung.

Dieses bisher übliche Löschen der Daten der bisher genutzten Zelle oder Zellgruppe wird erfindungsgemäß dadurch ersetzt, dass diese Daten zumindest temporär gespeichert werden und für eine weitere Auswertung zur Verfügung stehen.

Die Erfindung besteht also insbesondere darin, zusätzlich zur globalen Zellkennung n auch den Zeitpunkt t, zu dem die Speicherung stattgefunden hat, zu speichern.

Die Erfindung ist sowohl anwendbar, wenn beide Zellen bei Auslösung eines Zellwechsels von demselben Kernnetz-Knoten (Intra-Wechsel) betrieben werden, als auch dann, wenn bei Zellen von verschiedenen Kernnetz-Knoten (Inter-Wechsel) betrieben werden.

### Anwendungsfall Intra-Wechsel:

Wenn sowohl die frühere als auch die aktuelle und die nächste Zelle vom gleichen "Core Network-Knoten" (Kernnetzknoten) behandelt, also verwaltet und betrieben werden, wenn eine Anfrage im "Core Network" empfangen wird, um die globale Zellkennung n aufgrund einer Änderung des Standortes des Endgerätes zu aktualisieren, so wird erfindungsgemäß die letzte globale Zellkennung n und den Zeitpunkt t der Speicherung, die als aktuelle Kennung n gespeichert worden war, in einem anderen zusätzlichen temporären Speicher als vorherige Kennung n-1 mit dem dazugehörigen Zeitstempel t-1 gespeichert, bevor die neue aktuelle Zellkennung n+1 gespeichert wird und dabei die ältere Zellkennung n und der alte Zeitstempel t durch den neuen Zeitstempel t+1 überschrieben wird.

Dadurch kennt der entsprechende Knoten vom "Core Network":
- die globale Zellkennung n der Zelle, in der das Endgerät momentan registriert ist;
- den Zeitpunkt t, zu dem die aktuelle globale Zellkennung n gespeichert wurde;
- die globale Zellkennung n-1 der Zelle, in der das Endgerät vorher (vor dem Wechsel in die Zelle n) registriert war, und
- den Zeitpunkt t-1, zu dem die vorherige globale Zellkennung n-1 gespeichert wurde, d.h. der Zeitpunkt t-1 der Registrierung in der vorherigen Zelle n-1

Da bei der Auslösung eines Zellwechsels wie oben angegeben die Daten der Zelle n+1 übermittelt werden, in die das Endgerät überwechseln soll, kann ein Vergleich der Kennung der Zelle n+1, in die gewechselt werden soll, mit der Kennung der Zelle n-1, in der das Endgerät vor der Registrierung in der aktuellen Zelle n registriert war, erfolgen. Wird dabei eine Übereinstimmung der Kennungen n-1 und n+1 festgestellt, so kann weiter ausgewertet werden, zu welchem Zeitpunkt t der Wechsel von der vorherigen Zelle n-1 in die aktuelle Zelle n erfolgt ist. Wenn diese Zeitdifferenz Δt einen vorgebbaren Grenzwert unterschreitet, kann daraus auf eine instabile Lage zwischen den Zellen n-1=n+1 und n geschlossen werden.

### Anwendungsfall Inter-Wechsel:

Wenn die aktuelle Zelle einerseits, die frühere und die nächste Zelle anderseits von zwei verscheidenen "Core Network-Knoten" (Kernnetzknoten) behandelt, also verwaltet und betrieben werden, wenn eine Anfrage im "Core Network" empfangen wird, um die globale Zellkennung n aufgrund einer Änderung des Standortes des Endgerätes zu aktualisieren, so wird erfindungsgemäß die letzte globale Zellkennung n und den Zeitpunkt t der Speicherung, die als aktuelle Kennung n gespeichert worden war, in einem anderen zusätzlichen temporären Speicher als vorherige Kennung n-1 mit dem dazugehörigen Zeitstempel t-1 gespeichert, bevor die neue aktuelle Zellkennung n+1 gespeichert wird und dabei die ältere Zellkennung n und der alte Zeitstempel t durch den neuen Zeitstempel t+1 überschrieben hat.

Wenn ein Endgerät ein "Core-Network"-Knoten (Kernnetz-Knoten) verlässt, um zu in einem anderen "Core-Network"-Knoten der gleichen Art zu wechseln, wird der temporäre Speicher, in dem die aktuelle Zelle n gespeichert ist, nicht gelöscht. Dadurch kann der "Core-Network"-Knoten die Information die als "aktuelle Zelle" n bekannt ist, benutzen, wenn das Endgerät zurück kommt und diese semantisch als "frühere Zelle" interpretieren, obwohl es in dem temporären Speicher "aktuelle Zelle" abgelegt wurde.

Dadurch kennt der entsprechende Knoten vom "Core Network" nach einem Wechsel aus einem anderen Konten der gleichen Art:
- die globale Zellkennung n der Zelle, in der das Endgerät zuletzt in diesem Knoten registriert war die als frhere Zelle interpretiert werden kann.
- den Zeitpunkt t, zu dem die aktuelle globale Zellkennung n gespeichert wurde.

Da bei der Auslösung eines Zellwechsels wie oben angegeben die Daten der Zelle n+1 übermittelt werden, in die das Endgerät überwechseln soll, kann für den Fall, in dem die frühere und die aktuelle Zelle von zwei verschiedenen "Core Network"-Knoten behandelt werden, ein Vergleich der Kennung der Zelle n+1, in die gewechselt werden soll, mit der Kennung der Zelle n, in der das Endgerät zuletzt in diesem "Core Network"-Knoten registriert war, erfolgen. Wird dabei eine Übereinstimmung der Kennungen n und n+1 festgestellt, so kann weiter ausgewertet werden, zu welchem Zeitpunkt t+1 der Wechsel von der aktuellen Zelle n in die nachfolgendezelle n+1 angefragt ist. Wenn diese Zeitdifferenz Δt einen vorgebbaren Grenzwert unterschreitet, kann daraus auf eine instabile Lage zwischen den verschiedenen Zellen geschlossen werden.

Die Erfindung benutzt die oben genannten Informationen, um einen überflüssigen, d.h. unnötigen Wechsel der Zelle, in der das Endgerät angemeldet, d.h. registriert ist, zu erkennen.

Wenn ein Endgerät sich aufgrund der Qualität der Funkversorgung meldet, um von einer Zelle n in eine andere Zelle n+1 zu wechseln, schickt das Funknetz die gesamte Kennung der Zelle n+1, wo das Endgerät hin will.

Wenn das Funknetz sich aufgrund der Qualität der Funkversorgung entscheidet, dem Endgerät den Wechsel von der aktuellen Zelle n in eine andere Zelle n+1 zu befehlen, so sendet das Funknetz die gesamte Kennung der Zelle n+1, wo das Endgerät hin soll, an das Kernnetz (Core Network).

Der "Core Network"-Knoten vergleicht dann erfindungsgemäß die globale Zellkennung n-1, wo das Endgerät vorher registriert war, und die Zellkennung n+1, wo das Endgerät registriert werden soll, inbesondere für den Fall wo die Zelle mit der Kennung n+1 und n-1 vom gleichen "Core-Network"-Knoten behandelt werden.

Anwendbar ist die Erfindung jedoch auch dann, wenn die Zelle n, wo das Endgerät zuletzt registriert war, und die Zelle n+1, wo das Endgerät registriert werden soll, zwei verschiedenen Kernnetzknoten zugeordnet ist, d.h. für den Fall, dass das Endgerät von einer Zelle die einem anderen "Core-Network"-Knoten zugeordnet ist, zu diesem "Core-Network"-Knoten wechseln soll.

Wenn das Endgerät innerhalb vom gleichen "Core-Network"-Knoten wechselt, und wenn die beide Zellkennungen n-1 und n+1 gleich sind und wenn der Zeitunterschied Δt=(t+1)-(t-1) zwischen dem aktuellen Zeitpunkt (t+1) und dem Zeitstempel t-1 der Registrierung der ältere Zelle n-1 unter einer vorgegebenen Grenze ist, wird der Zellwechsel als überflüssig bewertet und kann je nach Konfiguration vom Core Network Knoten verweigert werden.

Wenn das Endgerät zwischen zwei "Core-Network"-Knoten wechselt, und wenn die beide Zellkennungen n und n+1 gleich sind und wenn der Zeitunterschied Δt=(t+1)-(t) zwischen dem aktuellen Zeitpunkt (t+1) und dem Zeitstempel t der Registrierung der ältere Zelle n unter einer vorgegebenen Grenze ist, wird der Zellwechsel als überflüssig bewertet und kann je nach Konfiguration vom Core Network Knoten verweigert werden.

Vorzugsweise wird bei einer Ablehnung eines Wechsels in die neue Zelle (n+1) eine entsprechende Mitteilung netzseitig generiert um eine unverzügliche erneute Auslösung einer Wechselprozedur zu unterbinden

Vorzugsweise weist die Kennung einer Zelle n, n+1 eine Zellidentifikation und eine Gebietsidentifikation auf. Durch die Zellidentifikation, die so genannte Global Cell ID, und die Gebietsidentifikation zur Identifikation der verschiedenen Gebiete (Areas), ist eine eindeutige Zuordnung, Identifikation und Auswertung zur Detektion instabiler Zustände und Erkennung unnötiger Zellwechsel möglich.

Der Begriff des Zellwechsels erfasst dabei jeweils sowohl den Wechsel von einer Zelle n in eine andere Zelle n+1 der selben Funktechnik, als auch den Wechsel von einer Zelle n einer ersten Funktechnik zu einer anderen Zelle n+1 einer anderen Funktechnik.

Vorzugsweise werden die Daten netzseitig abgelehnter Wechsel umfassend zumindest die Kennungen der Zellen (n, n+1) und/oder die Kennung des Mobilfunkendgerätes zur weiteren Verarbeitung netzseitig gespeichert.

Das "Core Network" kann somit eine Statistik führen, d.h. derartige Daten speichern und dabei sowohl die überflüssige Zellwechseln zählen als auch Daten der betroffenen Kunde und Endgeräte speichern, um es dem Betreiber zu ermöglichen die am meisten betroffenen Kunden und/oder Zellen und/oder Endgerätetypen zu identifizieren.

Die Erfindung wird nachfolgend anhand der Figuren näher erläutert. Es zeigen:
- Figur 1: Einen instabilen Zustand mit mehrfachen Wechseln zwischen zwei Zellen innerhalb eines Kernnetzes-Knoten;
- Figur 2: einen instabilen Zustand mit mehrfachen Wechseln zwischen zwei Zellen zweier verschiedener Kernnetz-Knoten;
- Figur 3: ein Ablaufschema einer ersten Ausführungsform des erfindungsgemäßen Verfahrens;
- Figur 4: ein Ablaufschema einer zweiten Ausführungsform des erfindungsgemäßen Verfahrens.

Mit identischen Bezugszeichen sind identische Komponenten oder Abläufe bezeichnet.

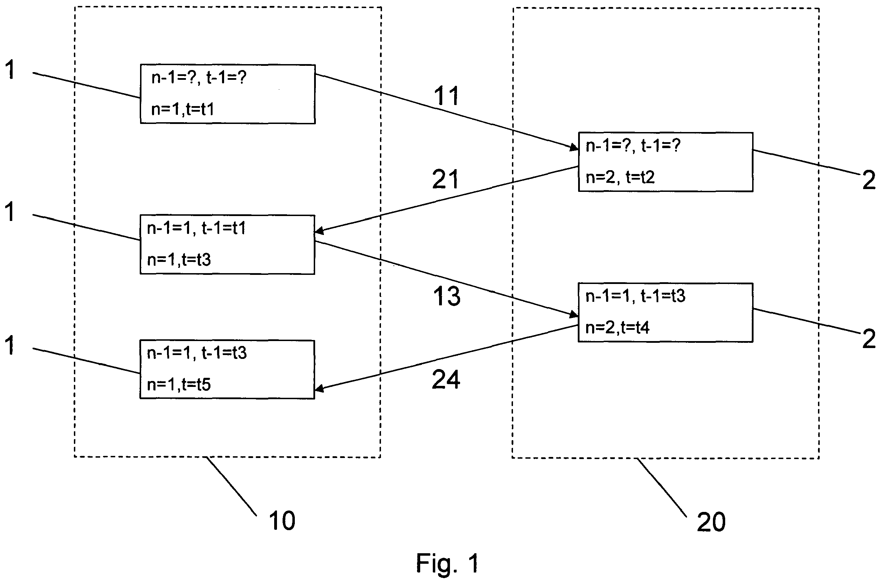

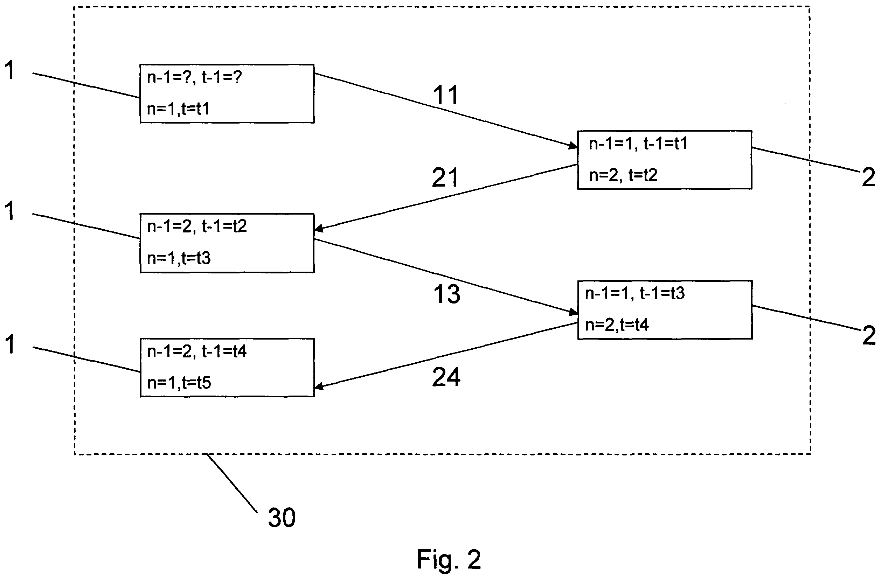

In den Figuren 1 und 2 sind instabile Zustände dargestellt, infolge derer ein wiederholter Zellwechsel eines eingebuchten Mobilfunkendgerätes von einer ersten Zelle 1 in eine zweite Zelle 2 und umgekehrt innerhalb des Mobilfunksystems erfolgt.

In dem in Figur 1 dargestellten Beispiel wird die erste Zelle 1 von einem ersten Kernnetz-Knoten 10 (Core Network 10) und die zweite Zelle 2 von einem zweiten Kernnetz-Knoten 20 (Core Network 20) betrieben, d.h. dass die Zellen 1, 2 in verschiedene Kernnetze 10, 20 eingebunden sind.

Bei dem in Figur 2 dargestellten zweiten Beispiel werden sowohl die erste Zelle 1 als auch die zweite Zelle 2 von einem einzigen Kernnetz-Knoten 30 (Core Network 30) betrieben, d.h. dass die Zellen 1, 2 hier in das selbe Kernnetz-Knoten 30 eingebunden sind und von diesem verwaltet werden.

### Fig. 1 Inter-Fall:

Bei der ersten Registrierung eines Mobilfunkendgerätes in der Zelle 1 werden die Zellidentifikation 1 und der Zeitpunkt t1 dieser ersten Registrierung erfasst. Die Felder für die vorherige Registrierung sind in diesem Fall noch nicht belegt, da das Einbuchen des Endgerätes erstmalig, zum Beispiel nach dem Einschalten des Gerätes, erfolgt.

Aufgrund der Qualität der Funkverbindung wird ein Zellwechsel 11 von der ersten Zelle 1 zu einer anderen Zelle 2 ausgelöst. Bei der Registrierung des Mobilfunkendgerätes in dieser zweiten Zelle 2 werden die Kennung 2 dieser Zelle sowie der Zeitpunkt t2 der Registrierung in dieser Zelle 2 gespeichert.

Wird nunmehr aufgrund einer instabilen Lage ein erneuter Wechsel 21 zurück von der zweiten Zelle 2 in die erste Zelle 1 ausgelöst, so liegen dem Kernnetz-Knoten 10 die Daten der zuvor genutzten Zelle 1 sowie die Zeitpunkt t1 der früheren Registrierung und die Zielzelle 1 und ferner der Zeitpunkt t3 der Registrierung in dieser Zelle 1 vor.

Hieran ist die Übereinstimmung der Kennung 1 der vorherigen Zelle (n) und der Zielzelle (n+1) erkennbar. Ferner kann der Zeitstempel t1 der vorherigen Einbuchung in der Zelle 1 ausgewertet werden, d.h. es kann bei Feststellung der Übereinstimmung der Zellkennungen (n+1) und (n) die verstrichene Zeit seit der vorherigen Registrierung in der Zielzelle ermittelt werden. Wird dabei eine vorgebbare Zeitgrenze unterschritten, so kann hieraus auf eine instabile Lage geschlossen werden.

### Fig. 2 Intra-Fall:

Bei der ersten Registrierung eines Mobilfunkendgerätes in der Zelle 1 werden die Zellidentifikation 1 und der Zeitpunkt t1 dieser ersten Registrierung erfasst. Die Felder für die vorherige Registrierung sind in diesem Fall noch nicht belegt, da das Einbuchen des Endgerätes erstmalig, zum Beispiel nach dem Einschalten des Gerätes, erfolgt.

Aufgrund der Qualität der Funkverbindung wird ein Zellwechsel 11 von der ersten Zelle 1 zu einer anderen Zelle 2 ausgelöst. Bei der Registrierung des Mobilfunkendgerätes in dieser zweiten Zelle 2 werden die Kennung 2 dieser Zelle sowie der Zeitpunkt t2 der Registrierung in dieser Zelle 2 gespeichert.

Wird nunmehr aufgrund einer instabilen Lage ein erneuter Wechsel 21 zurück von der zweiten Zelle 2 in die erste Zelle 1 ausgelöst, so liegen dem Kernnetz die Daten der zuvor genutzten Zelle 1 sowie die Zeitpunkt t1 der früheren Registrierung in der Zelle 1 und ferner die Daten der zur Zeit genutzten Zelle 2 mit dem Zeitpunkt t2 der Registrierung in dieser Zelle 2 vor und der nächste Zelle 1 mit dem Zeitpunkt t3.

Hieran ist die Übereinstimmung der Kennung 1 der vorherigen Zelle (n-1) und der Zielzelle (n+1) erkennbar. Ferner kann der Zeitstempel t1 der vorherigen Einbuchung in der Zelle 1 ausgewertet werden, d.h. es kann bei Feststellung der Übereinstimmung der Zellkennungen (n+1) und (n-1) die verstrichene Zeit seit der vorherigen Registrierung in der Zielzelle ermittelt werden. Wird dabei eine vorgebbare Zeitgrenze unterschritten, so kann hieraus auf eine instabile Lage geschlossen werden.

Bei wiederholt ausgelösten Wechseln 11, 21 von der ersten Zelle 1 in die zweite Zelle 2 und umgekehrt liegen jeweils die Kennungen und Zeitstempel der Registrierung des Mobilfunkendgerätes in der jetzigen, aktuellen Zelle sowie in der davor genutzten Zelle vor.

Erfindungsgemäß ist somit insbesondere folgendes vorgesehen:
Die Core Network Knoten (d.h. das Kernnetz) speichern zusätzlich zumindest temporär den Zeitpunkt t, zu dem die globale Zellkennung n während der Registrierung des Endgerätes gespeichert wird.

Im Falle einer Änderung des Standortes des Endgerätes speichern die Core Network Knoten die vorherige globale Zellkennung n-1 und der Zeitstempel t-1, zu dem die Zellkennung n-1 registriert und gespeichert wurde, damit die aktuelle Zellkennung n und die frühere Zellkennung n-1 dem Core Network zur Verfügung stehen.

Wenn ein Endgerät sich beim "Core Network" meldet, um in eine neue Zelle n+1 zu wechseln, kennt dann der "Core Network-Knoten" die frühere (n-1), die aktuelle (n) und die gewünschte zukünftige Zellkennung(n+1). Damit können die "Core Network" Knoten erkennen, wenn ein Endgerät zurück in eine Zelle will oder soll, in der es vorher eingebucht war.

Es wird in den Core Network Knoten ein Parameter (Timer) definiert, der vorgibt, wie lange nach einem Wechsel ein Wechsel von einer Zelle und zurück in die gleiche Zelle wie vorher erkannt wird, und somit als überflüssig gezählt und behandelt wird.

Im Falle einer Änderung des Standortes des Endgerätes zurück zum früheren Standort, vergleichen die "Core Network" Knoten den aktuellen Zeitpunkt t+1 mit dem Zeitpunkt t (im Falle eines Wechseln zwischen zwei verschiedene Knoten) oder (t-1) im Falle eines Wechslen innerhalb des gleichen Knoten, zu dem das Endgerät vorher registriert wurde und der gespeichert wurde. Wenn der Unterschied Δt zwischen den beiden Zeitstempeln t-1, t+1 odert kleiner ist als der Timer, wird der Zellwechel als überflüssig erkannt.

Dabei bedeuten:
- n-1: Kennung der Zelle, in der das Endgerät vor dem Wechsel in die aktuelle Zelle registriert war;
- n: Kennung der aktuellen Zelle;
- n+1: Kennung der Zelle, in die gewechselt werden soll;
- t-1: Zeitpunkt (Zeitstempel) der Registrierung in der vorherigen Zelle n-1;
- t: Zeitpunkt (Zeitstempel) der Registrierung in der aktuelle Zelle n;
- t+1: Zeitpunkt der Anforderung der Wechsels in die nächste Zelle n+1

Wenn das Kernnetz, d.h. die Core Network Knoten, eine überflüssige Anfrage nach einem Zellwechsel erkannt haben, verweigern die Core Network Knoten den angeforderten Zellwechsel und schicken dabei eine dedizierte Begründung (Reject Cause), die vom Endgerät und vom Funknetz dementsprechend interpretiert werden kann, damit eine neue Anfrage für den gleichen Zellwechsel nicht unverzüglich danach stattfindet.

Wenn die Core Network Knoten eine überflüssige Anfrage nach einem Zellwechsel erkannt haben, speichern die "Core Network- Knoten" vorzugsweise die Kundendaten, die Endgerätekennung, die Zellkennung und alle weiteren Informationen die notwendig sind, um eine spätere Verarbeitung / Auswertung der überflüssigen Zellwechsel zu ermöglichen, um die Qualität des Funknetzes und der angebotenen Dienste zu verbessern.

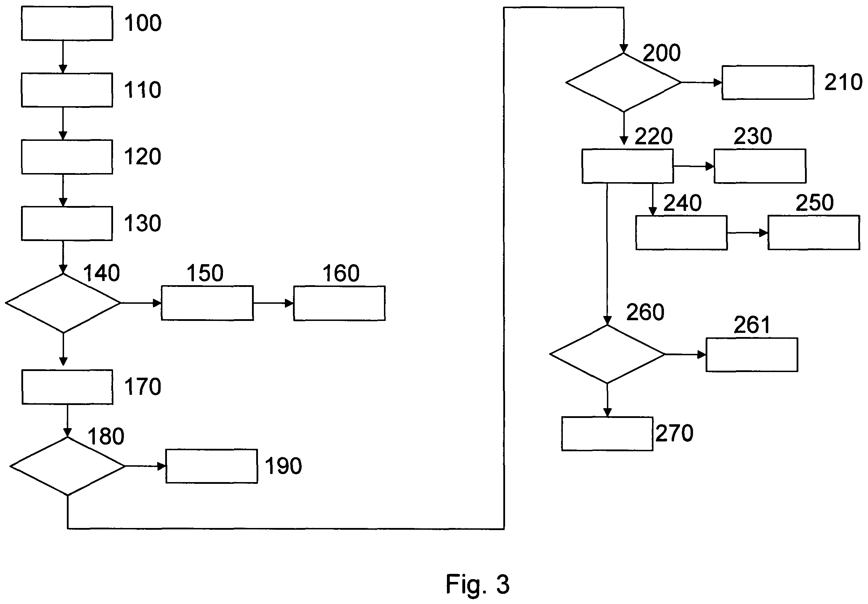

In Figur 3 ist ein Ablaufdiagramm einer Ausführungsform des erfindungsgemäßen Verfahrens zur Detektion instabiler Zustände für den Fall das Endgerät innerhalb des gleichen "Core-network"-Knoten dargestellt.

Bei der Registrierung 100 eines Mobilfunkendgerätes in der aktuellen Zelle werden im Schritt 110 die Identifikation der aktuellen Zelle n sowie im nächsten Schritt 120 der Zeitstempel t der Registrierung des Mobilefunkendgerätes in der aktuellen Zelle n gespeichert. Mit der Registrierung des Mobilfunkendgerätes in der aktuellen Zelle n ist der Moment des Einbuchens des Mobilfunkendgerätes in dieser Zelle des Mobilfunknetzes gemeint, respektive der Zeitpunkt t des Wechsels in die aktuelle Zelle n.

Sofern das Kernnetz seitens des Mobilfunkendgerätes oder seitens des Funknetzes eine Anforderung 130 zum Wechsel in eine andere Zelle n+1 innerhalb des Netzes erhält, so wird überprüft, ob Daten einer vorherigen Zelle n-1 vorliegen. Dies ist jedoch nur der Fall, sofern das Mobilfunkendgerät vor der Registrierung in der aktuellen Zelle n zuvor in einer anderen Zelle n-1 registriert war.

Sofern das Mobilfunkendgerät jedoch erstmalig in der aktuellen Zelle n registriert wurde, beispielsweise nach einer Inbetriebnahme des Mobilfunkendgerätes, so wird nunmehr nach Überprüfen 140, ob die Daten der vorherigen Zelle n-1 vorliegen und es festgestellt wird, dass dies nicht der Fall ist, im Schritt 150 die Kennung der aktuellen Zelle n sowie der Zeitpunkt der Registrierung t in dieser aktuellen Zelle n zwischengespeichert und festgestellt, dass es sich um einen gewöhnlichen Wechselprozess, d.h. eine gewöhnliche Wechselprozedur 160 handelt, die dementsprechend durchgeführt wird.

War das Mobilfunkendgerät vor der aktuellen Zelle n jedoch bereits in einer vorherigen Zelle n-1 registriert, so wurden die Kennung der vorherigen Zelle n-1 und der Zeitpunkt t-1 der Registrierung in dieser vorherigen Zelle zwischengespeichert und liegen nunmehr zur Auswertung vor.

In einem nächsten Schritt 170 wird nunmehr überprüft, ob die Kennung der Zielzelle n+1 mit der Kennung der vorherigen Zelle n-1 übereinstimmt. Dies erfolgt im nächsten Schritt 180. Sind die Zielzelle n+1 und die vorherige Zelle n-1 nicht miteinander identisch, so handelt es sich um eine gewöhnliche Wechselprozedur die im nächsten Schritt 190 ausgelöst und durchgeführt wird.

Sind jedoch die Kennungen der Zielzelle n+1 und der vorherigen Zelle n-1 identisch, so erfolgt in einem nächsten Schritt 200 eine Auswertung des Zeitstempels, der Registrierung t-1 in der vorherigen Zelle n-1.

Wird dabei eine vorgebbare Zeitschwelle überschritten, so handelt es sich um einen gewöhnlichen Wechselprozess der in einem nächsten Schritt 210 ausgelöst und durchgeführt wird, da seit der vorherigen Registrierung genug Zeit verstrichen ist.

Wird jedoch bei der Überprüfung 200 festgestellt, dass eine vorgebbare Zeitschwelle seit der Registrierung t-1 in der vorhergehenden Zelle n-1 unterschritten wird, so wird eine überflüssige Wechselprozedur 220 detektiert und eine Wechsel in die Zelle n+1 die mit der vorhergehenden Zelle n-1 übereinstimmt kann unterbunden werden.

Sofern ein solcher überflüssiger Zellwechsel 220 detektiert wird, so erfolgt in einem Zwischenschritt 230 zunächst eine statistische Erfassung die eine weitere Auswertung gestattet: mindestens ein Zähler wird incrementiert.

In einem optionalen Schritt 240 können weitere Daten wie beispielsweise die Kennung der Zielzelle n+1 sowie die Kennung der Quellzelle n sowie die entsprechenden Zeitstempel der Registrierungen für weitere fakultative Auswertungen 250 erfasst und gespeichert werden.

Ferner gestattet die Identifikation eines instabilen Zustandes durch Feststellung eines überflüssigen Zellwechsels das Absetzten einer entsprechenden Verweigerungsmeldung 270, die durch das Funknetz und / oder das Mobilfunkendgerät entsprechend ausgewertet werden kann, so dass eine weitere Anforderung nicht unmittelbar im Anschluss an die netzseitige Verweigerung des Zellwechsels erneut ausgelöst wird.

Dies geschieht allerdings nur optional nach dem Schritt 260, wenn der Betreiber des "Core-Network"-Knoten es so durch Konfiguration gewünscht hat.
Sollte eine Verweigerung der Anforderung zum überflüssigen Zellwechsel nicht gewünscht sein, so wird der "Core-Network"-Knoten eine gewöhnliche Wechselprozedur im nächsten Schritt 261 auslösen und durchführen.

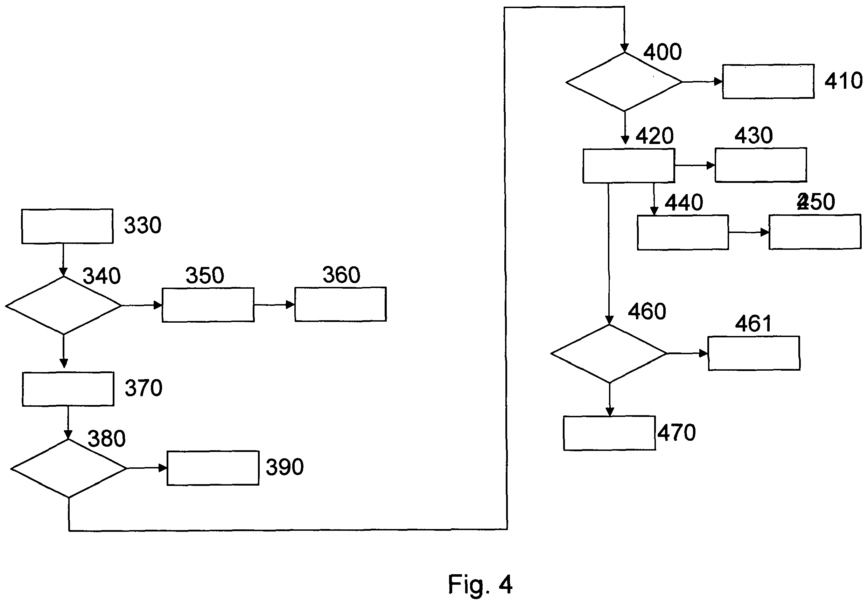

In Figur 4 ist ein Ablaufdiagramm einer weiteren Ausführungsform des erfindungsgemäßen Verfahrens zur Detektion instabiler Zustände für den Fall, dass das Endgerät zwischen zwei verschiedene "Core-Network"-Knoten wechseln soll, dargestellt.

Sofern das Kernnetz seitens des Mobilfunkendgerätes oder seitens des Funknetzes eine Anforderung 330 zum Wechsel in eine andere Zelle n+1 innerhalb des Netzes aber aus einem anderen "Core-Network"-Knoten kommend erhält, so wird überprüft, ob Daten einer vorherigen Zelle n vorliegen.

Sofern das Mobilfunkendgerät jedoch erstmalig in der aktuellen Zelle n registriert wurde, beispielsweise weil das Endgerät noch nie in diesem "Core-Network"-Knoten registriert wurde, so wird nunmehr nach Überprüfen 340, ob die Daten der vorherigen Zelle n vorliegen und es festgestellt wird, dass dies nicht der Fall ist, im Schritt 350 die Kennung der zukünftigen Zelle sowie der Zeitpunkt der Registrierung t in dieser aktuellen Zelle n zwischengespeichert und festgestellt, dass es sich um einen gewöhnlichen Wechselprozess, d.h. eine gewöhnliche Wechselprozedur 360 handelt, die dementsprechend durchgeführt wird.

War das Mobilfunkendgerät vor der aktuellen Zelle n jedoch bereits in einer vorherigen Zelle n registriert, so wurden die Kennung der vorherigen Zelle n und der Zeitpunkt t der Registrierung in dieser vorherigen Zelle zwischengespeichert und liegen nunmehr zur Auswertung vor.

In einem nächsten Schritt 370 wird nunmehr überprüft, ob die Kennung der Zielzelle n+1 mit der Kennung der vorherigen Zelle n übereinstimmt. Dies erfolgt im nächsten Schritt 380. Sind die Zielzelle n+1 und die vorherige Zelle n nicht miteinander identisch, so handelt es sich um eine gewöhnliche Wechselprozedur die im nächsten Schritt 390 ausgelöst und durchgeführt wird.

Sind jedoch die Kennungen der Zielzelle n+1 und der vorherigen Zelle n identisch, so erfolgt in einem nächsten Schritt 400 eine Auswertung des Zeitstempels, der Registrierung t in der vorherigen Zelle n

Wird dabei eine vorgebbare Zeitschwelle überschritten, so handelt es sich um einen gewöhnlichen Wechselprozess der in einem nächsten Schritt 410 ausgelöst und durchgeführt wird, da seit der vorherigen Registrierung genug Zeit verstrichen ist.

Wird jedoch bei der Überprüfung 400 festgestellt, dass eine vorgebbare Zeitschwelle seit der Registrierung t in der vorhergehenden Zelle n unterschritten wird, so wird eine überflüssige Wechselprozedur 420 detektiert und eine Wechsel in die Zelle n+1 die mit der vorhergehenden Zelle n übereinstimmt kann unterbunden werden.

Sofern ein solcher überflüssiger Zellwechsel 420 detektiert wird, so erfolgt in einem Zwischenschritt 430 zunächst eine statistische Erfassung die eine weitere Auswertung gestattet: mindestens ein Zähler wird incrementiert.

In einem optionalen Schritt 440 können weitere Daten wie beispielsweise die Kennung der Zielzelle n+1 sowie die Kennung der Quellzelle n sowie die entsprechenden Zeitstempel der Registrierungen für weitere fakultative Auswertungen 450 erfasst und gespeichert werden.

Ferner gestattet die Identifikation eines instabilen Zustandes durch Feststellung eines überflüssigen Zellwechsels das Absetzten einer entsprechenden Verweigerungsmeldung 470, die durch das Funknetz und / oder das Mobilfunkendgerät entsprechend ausgewertet werden kann, so dass eine weitere Anforderung nicht unmittelbar im Anschluss an die netzseitige Verweigerung des Zellwechsels erneut ausgelöst wird.

Dies geschieht allerdings nur nachdem es im Schritt 460, wenn der Betreiber des "Core-Network"-Knoten es so durch Konfiguration gewünscht hat.
Sollte eine Verweigerung der Anforderung zum überflüssigen Zellwechsel nicht gewünscht sein, so wird der "Core-Network"-Knoten eine gewöhnliche Wechselprozedur im nächsten Schritt 461 auslösen und durchführen.

## Patentansprüche

1. Verfahren zum Betrieb eines zellularen Mobilfunknetzes, wobei jede Zelle des Mobilfunknetzes eine eindeutige Kennung aufweist, und wobei zu einem in einer Zelle aktuell registrierten Mobilfunkendgerät die Kennung der aktuellen Zelle netzseitig temporär gespeichert wird und zusätzlich zumindest der Zeitpunkt der Registrierung in der aktuellen Zelle gespeichert wird, insbesondere temporär gespeichert wird, wobei zusätzlich die Kennung der vor der Registrierung des Mobilfunkendgerätes in der aktuellen Zelle genutzten Zelle gespeichert wird, **dadurch gekennzeichnet dass** zusätzlich der Zeitpunkt der Registrierung in der zuvor genutzten Zelle gespeichert wird, insbesondere temporär gespeichert wird.

2. Verfahren nach Anspruch 1, **dadurch gekennzeichnet, dass** bei einer Auslösung einer Wechselprozedur von einer aktuellen Zelle zu einer neuen Zelle, die beide von einem gleichen Kernnetzknoten (30) verwaltet werden, zur Registrierung des Mobilfunkendgerätes in einer neuen Zelle des Mobilfunknetzes die Kennung der neuen Zelle mit der Kennung der vor der Registrierung in der aktuellen Zelle genutzten Zelle verglichen wird, und bei einer Übereinstimmung dieser Kennungen eine Auswertung der Zeitpunkte der Registrierung in der vorherigen Zelle und des aktuellen Zeitpunktes erfolgt, wobei bei Unterschreitung einer festlegbaren Zeitspanne der Wechsel in die neue Zelle netzseitig als überflüssiger Wechsel detektiert wird.

3. Verfahren nach Anspruch 1, **dadurch gekennzeichnet, dass** bei einer Auslösung einer Wechselprozedur von einer aktuellen Zelle zu einer neuen Zelle, die von zwei verschiedenen Kernnetzknoten (10, 20) der gleichen Art verwaltet werden, zur Registrierung des Mobilfunkendgerätes in der neuen Zelle des Mobilfunknetzes die Kennung der neuen Zelle mit der Kennung der vor der Registrierung in der aktuellen Zelle genutzten Zelle des selben Kernnetzknotens (10, 20) verglichen wird, und bei einer Übereinstimmung dieser Kennungen eine Auswertung der Zeitpunkte der Registrierung in der vorherigen Zelle und des aktuellen Zeitpunktes erfolgt, wobei bei Unterschreitung einer festlegbaren Zeitspanne der Wechsel in die neue Zelle netzseitig als überflüssiger Wechsel detektiert wird.

4. Verfahren nach Anspruch 1, **dadurch gekennzeichnet, dass** bei einer Auslösung einer Wechselprozedur von einer aktuellen Zelle zu einer neuen Zelle, die von zwei verschiedenen Kernnetzknoten (10, 20) der gleichen Art verwaltet werden, zur Registrierung des Mobilfunkendgerätes in der neuen Zelle des Mobilfunknetzes die Kennung derjenigen Zelle, die als aktuelle Zelle in dem die aktuelle Zelle verwaltenden Kernnetzknoten (10, 20) gespeichert war, in einem Speicherregister für die frühere Zelle gespeichert wird, und die Werte in einem Speicherregister für die aktuelle Zelle reinitialisiert werden, nachdem der die aktuelle Zelle verwaltende Kernnetzknoten (10, 20) eine Meldung von einer zentralen Datenbank, insbesondere HLR oder HSS, erhalten hat, dass der Wechsel erfolgreich war.

5. Verfahren nach Anspruch 1, **dadurch gekennzeichnet, dass** bei einer Auslösung einer Wechselprozedur von einer aktuellen Zelle zu einer neuen Zelle, die von zwei verschiedenen Kernnetzknoten (10, 20) der gleichen Art oder von demselben Kernnetzknoten (30) verwaltet werden, zur Registrierung des Mobilfunkendgerätes in der neuen Zelle des Mobilfunknetzes, die Kennung der neuen Zelle mit der Kennung der früher benutzten Zelle , die vom Endgerät in einer Aufforderung zum Zellwechsel mitgeschickt wird, verglichen wird und bei einer Übereinstimmung dieser Kennungen eine Auswertung der Zeitpunkte der Registrierung in der vorherigen Zelle und des aktuellen Zeitpunktes erfolgt, wobei bei Unterschreitung einer festlegbaren Zeitspanne der Wechsel in die neue Zelle netzseitig als überflüssiger Wechsel detektiert wird.

6. Verfahren nach einem der vorherigen Ansprüche, **dadurch gekennzeichnet, dass** der Wechsel in die neue Zelle netzseitig als überflüssiger Wechsel abgelehnt wird und dabei dem Endgerät eine dedizierte Begründung zugeschickt wird.

7. Verfahren nach einem der vorherigen Ansprüche, **dadurch gekennzeichnet, dass** die Daten netzseitig abgelehnter überflüssiger Wechsel umfassend zumindest die Kennungen der Zellen und/oder die Kennung des Mobilfunkendgerätes zur weiteren Verarbeitung netzseitig gespeichert werden.

8. Computerprogrammprodukt umfassend ein auf einer Recheneinheit lauffähiges Computerprogramm, welches das Verfahren nach einem der vorherigen Ansprüche durchführt, wenn es auf einer Recheneinheit eines Mobilfunknetzes ausgeführt wird.

## Claims

1. Method for operating a cellular mobile radio network, wherein each cell of the mobile radio network has an explicit identifier, and wherein a mobile radio terminal currently registered in a cell has the identifier of the current cell temporarily stored for it on the network, and additionally at least the time of registration in the current cell is stored, in particular is temporarily stored, wherein additionally the identifier of the cell used before registration of the mobile radio terminal in the current cell is stored, **characterized in that** additionally the time of registration in the previously used cell is stored, in particular is temporarily stored.

2. Method according to Claim 1, **characterized in that** initiation of a change procedure from a current cell to a new cell, both of which are managed by one and the same core network node (30), prompts the radio mobile terminal to be registered in a new cell of the mobile radio network by virtue of the identifier of the new cell being compared with the identifier of the cell used before registration in the current cell, and a match between these identifiers prompts the times of registration in the previous cell and the current time to be evaluated, the change to the new cell being detected on the network as a superfluous change in the event of a shortfall below a definable period of time.

3. Method according to Claim 1, **characterized in that** initiation of a change procedure from a current cell to a new cell that are managed by two different core network nodes (10, 20) of the same type prompts the mobile radio terminal to be registered in the new cell of the mobile radio network by virtue of the identifier of the new cell being compared with the identifier of the cell of the same core network node (10, 20) used before registration in the current cell, and a match between these identifiers prompts the times of registration in the previous cell and the current time to be evaluated, the change to the new cell being detected on the network as a superfluous change in the event of a shortfall below a definable period of time.

4. Method according to Claim 1, **characterized in that** initiation of a change procedure from a current cell to a new cell that are managed by two different core network nodes (10, 20) of the same type prompts the mobile radio terminal to be registered in the new cell of the mobile radio network by virtue of the identifier of that cell which was stored as the current cell in the core network node (10, 20) that manages the current cell being stored in a storage register for the earlier cell, and the values in a storage register for the current cell are reinitialized after the core network node (10, 20) managing the current cell has received a report from a central database, particularly HLR or HSS, indicating that the change was successful.

5. Method according to Claim 1, **characterized in that** initiation of a change procedure from a current cell to a new cell that are managed by two different core network nodes (10, 20) of the same type or by the same core network node (30) prompts the mobile radio terminal to be registered in the new cell of the mobile radio network by virtue of the identifier of the new cell being compared with the identifier of the cell used earlier, which is also sent by the terminal in a request to change cells, and a match between these identifiers prompts the times of registration in the previous cell and the current time to be evaluated, the change to the new cell being detected on the network as a superfluous change in the event of a shortfall below a definable period of time.

6. Method according to one of the preceding claims, **characterized in that** the change to the new cell is rejected on the network as a superfluous change and at the same time the terminal is sent a dedicated explanation.

7. Method according to one of the preceding claims, **characterized in that** the data of superfluous changes rejected on the network comprising at least the identifiers of the cells and/or the identifier of the mobile radio terminal are stored on the network for further processing.

8. Computer program product comprising a computer program that is capable of running on a computation unit and that performs the method according to one of the preceding claims when it is executed on a computation unit of a mobile radio network.

## Revendications

1. Procédé pour faire fonctionner un réseau de radiotéléphonie mobile cellulaire, dans lequel chaque cellule du réseau de radiotéléphonie mobile comporte un identifiant univoque, et dans lequel l'identifiant de la cellule courante est stocké temporairement côté réseau pour un terminal de radiotéléphonie mobile courant enregistré dans une cellule et au moins l'instant de l'enregistrement dans la cellule courante est en outre stocké, en particulier, est stocké temporairement, dans lequel l'identifiant de la cellule utilisée avant l'enregistrement du terminal de radiotéléphonie mobile dans la cellule courante est en outre stocké, **caractérisé en ce que** l'instant de l'enregistrement dans la cellule préalablement utilisée est en outre stocké, et en particulier, est stocké temporairement.

2. Procédé selon la revendication 1, **caractérisé en ce que**, lors d'un déclenchement d'un processus de transfert d'une cellule courante à une nouvelle cellule, lesquelles cellules sont toutes deux gérées par un même noeud de réseau central (30) pour enregistrer le terminal de radiotéléphonie mobile dans une nouvelle cellule du réseau de radiotéléphonie mobile, l'identifiant de la nouvelle cellule est comparé à l'identifiant de la cellule utilisée avant l'enregistrement dans la cellule courante et, lors d'une concordance desdits identifiants, une évaluation des instants des enregistrements dans la cellule précédente et la cellule courante est effectuée, dans lequel, lors d'un abaissement en dessous d'un intervalle de temps pouvant être fixé, le transfert vers la nouvelle cellule est détecté côté réseau comme étant un transfert superflu.

3. Procédé selon la revendication 1, **caractérisé en ce que**, lors d'un déclenchement d'un processus de transfert d'une cellule courante à une nouvelle cellule, lesquelles cellules sont gérées de la même manière par deux noeuds de réseau central différents (10, 20), l'identifiant de la nouvelle cellule est comparé à l'identifiant de la cellule utilisée avant l'enregistrement dans la cellule courante pour un même noeud de réseau central (10, 20) pour enregistrer le terminal de radiotéléphonie dans la nouvelle cellule du réseau de téléphonie mobile et, lors d'une concordance entre lesdits identifiants, une évaluation des instants des enregistrements dans la cellule précédente et de l'instant courant est effectuée, dans lequel, lors d'un abaissement en dessous d'un intervalle de temps pouvant être fixé, le transfert vers la nouvelle cellule est détecté côté réseau comme étant un transfert superflu.

4. Procédé selon la revendication 1, **caractérisé en ce que**, lors d'un déclenchement d'un processus de transfert d'une cellule courante à une nouvelle cellule, lesquelles cellules sont gérées de la même manière par deux noeuds de réseau central différent (10, 20), l'identifiant de la cellule qui a été stockée en tant que cellule courante dans le noeud de réseau central (10, 20) gérant la cellule courante pour enregistrer le terminal de radiotéléphonie mobile dans la nouvelle cellule du réseau de radiotéléphonie mobile, est stocké dans un registre de mémoire destiné à la cellule antérieure et les valeurs sont réinitialisées dans un registre de mémoire destiné à la cellule courante, après que le noeud de réseau central (10, 20) gérant la cellule courante a obtenu un message provenant d'une banque de données centrale, en particulier un HLR ou un HSS, indiquant que le transfert a réussi.

5. Procédé selon la revendication 1, **caractérisé en ce que**, lors d'un déclenchement d'une procédure de transfert d'une cellule courante à une nouvelle cellule, lesquelles cellules sont gérées de la même manière par deux noeuds de réseau différents (10, 20) ou par le même noeud de réseau (30), l'identifiant de la nouvelle cellule est comparé à l'identifiant de la cellule précédemment utilisée, qui a été signalé par le terminal dans une demande de transfert intercellulaire, pour enregistrer le terminal de radiotéléphonie mobile dans la nouvelle cellule du réseau de radiotéléphonie mobile et, lors d'une concordance entre lesdits identifiants, une évaluation des instants des enregistrements dans la cellule précédente et de l'instant courant est effectuée, dans lequel, lors d'un abaissement en dessous d'un intervalle de temps pouvant être fixé, le transfert vers la nouvelle cellule est détecté côté réseau comme étant un transfert superflu.

6. Procédé selon l'une quelconque des revendications précédentes, **caractérisé en ce que** le transfert vers la nouvelle cellule est refusé côté réseau en tant que transfert superflu et une justification dédiée est ainsi communiquée au terminal.

7. Procédé selon l'une quelconque des revendications précédentes, **caractérisé en ce que** les données des transferts superflus refusés côté réseau comprenant au moins les identifiants des cellules et/ou l'identifiant du terminal de radiotéléphonie mobile sont stockées côté réseau en vue d'un traitement supplémentaire.

8. Produit de programme d'ordinateur comprenant un programme d'ordinateur pouvant être exécuté sur une unité de calcul, lequel programme d'ordinateur met en oeuvre le procédé selon l'une quelconque des revendications précédentes lorsqu'il est exécuté sur une unité de calcul d'un réseau de radiotéléphonie mobile.
